# EUROPEAN PATENT SPECIFICATION

(11) **EP 1 756 462 B1**
(45) Date of publication and mention of the grant of the patent: **09.07.2008**
(21) Application number: 05744846.6
(22) Date of filing: 17.05.2005
(51) Int. Cl.: F16L 37/091

(54) **PIPE FITTING**
ROHRVERBINDUNG
RACCORD DE CANALISATION

(30) Priority: 19.05.2004 GB 0411099
(43) Date of publication of application: 28.02.2007
(73) Proprietor: IBP Conex Limited, Tipton West Midlands DY4 7JU (GB)
(72) Inventor: GLAZE, Alan, Richard, Bromsgrove Worcestershire B60 1EP (GB); WEBB, Steven, Paul, West Midlands DY4 7LX (GB)
(74) Representative: Weber-Bruls, Dorothée
(86) International application number: PCT/GB2005/001889
(87) International publication number: WO 2005/114031

(56) References cited:
- GB-A- 2 249 367
- GB-A- 2 336 638
- GB-A- 2 390 882
- US-A- 5 292 157
- US-A- 5 695 224

## Description

This invention relates to a pipe fitting for use in coupling metallic pipes, particularly for hot and cold water applications.

Very many different types of pipe and tube fittings and couplers are known. Whilst some plastics material fittings can be used with copper pipe, and some fittings of copper can be used with plastics pipe, it is usual for the material of the fitting to match the pipe with which it is to be used. In very many cases, however, the fitting incorporates several components and is relatively expensive to produce. With some such fittings, which are demountable, it is necessary to provide a component solely for the purpose of engagement by a release tool to release teeth of a grip-ring of the fitting from the pipe, in use.

GB 2 390 882 A discloses a pipe fitting comprising a housing having a socket portion, the socket portion defining a bore into which a pipe may be inserted with a clearance, the inner end of the bore having a shoulder formation for abutment of the end of a pipe, a first groove being provided in the internal diameter of the bore adjacent its open end, said first groove decreasing in depth towards the open end of the bore, and a second groove being provided in the internal diameter of the bore, intermediate of the first groove and the shoulder formation, a sealing element being located in the second groove, the sealing element being adapted to sealingly engage a pipe inserted into the bore; and a resilient gripper ring located in said first groove, said gripper ring being a frusto-conical configuration diverging towards the open end of the bore, the gripper ring being adapted to be expanded by insertion of a pipe into the bore, the external diameter of the gripper ring being greater than that of the first groove at the outer end thereof and smaller than that of the first groove at the inner end thereof.

An object of the invention is to provide a pipe fitting which is less expensive to produce and has less components than known pipe fittings.

This object is achieved by the features of the fitting according to claim 1 or the features of the ensemble fitting and pipe according to claim 2.

Preferred embodiments of a pipe fitting according to the invention are given in sub-claims 3 to 12.

The invention will now be described, by way of example, with reference to the accompanying drawings, in which:
Figure 1 is a longitudinal cross- sectional view of a housing of a pipe fitting prior to internal components of the fitting being received therein and the housing ends deformed to retain them in position,
Figure 2 is a smaller scale side view of the housing of Figure 1,
Figure 3 is an exploded perspective view of components of a pipe fitting,
Figure 4 is a longitudinal cross-sectional view of a pipe fitting,
Figure 5 is a view of a fitting like that of Figure 4, with a pipe retained therein,
Figures 6 to 8 are respectively a plan view, a diameteral cross- sectional view and a side view of a grip ring of the fitting shown in Figures 3 to 5, to a larger scale, and
Figure 9 shows an embodiment of a fitting of the invention.

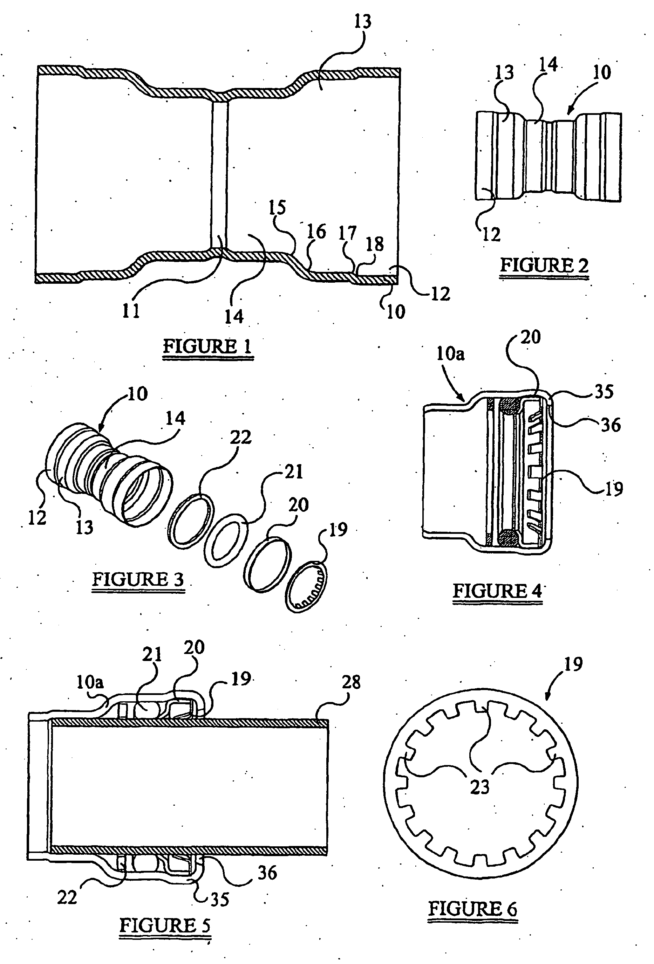

The pipe fittings shown in Figures 1 to 9 of the drawings have an outer housing of the fitting made of copper tube, with the fitting itself being intended for use with copper piping. Alternatively the outer housing could be of brass. In particular this allows components used with known pipe fittings to prevent 'folding' of the grip-ring, to be dispensed with, and additionally, as will be described hereinafter, the relationship between the housing and the internal fitting components enables the fitting to be releasable without the need for an intermediate component between the grip-ring and a release tool. As a consequence, such a fitting is less expensive to produce than similar known pipe fittings.

Figures 1 and 2 show one form of housing 10 of a pipe fitting , with Figure 3 showing the housing as well as the internal components which are received at each of the two ends thereof. The housing 10 is formed with various internal and correspondingly external stepped sections as shown best in Figure 1 by any suitable techniques, such as punch and die forming or roll forming. As can be seen from Figure 1, the housing 10 is symmetrical about a diameteral plane through its longitudinal centre, with each half extending from this minimum diameter centre section 11 being formed with three stepped sections 12, 13, 14 respectively of different internal, and external, diameters.

In Figure 1 the largest diameter section 12 is at the open end of the housing, the smallest diameter section 14 is adjacent the centre section 11, and the section 13, having a diameter between those of the sections 12 and 14, is disposed between those sections, so that, as can be seen from Figure 1, the internal, and external, diameters of the housing increase stepwise from the centre section 11 to the open end of the housing, this arrangement being repeated at both sides of the centre section 11, given that, as stated above, the housing is symmetrical about that section. As far as the respective diameters are concerned, it can be seen from Figure 1 that the diameter of the centre section 11 is only slightly smaller than that of the section 14, whereas the diameter of the middle section 13 is relatively much larger than that of the section 14. Finally, it can be seen from Figure 1 that the diameter of the largest section 12 is only slightly greater than the diameter of the section 13. All three sections are of similar axial extent, although the section 12 is slightly shorter than either of the sections 13 and 14. It can also be seen from Figure 1 that the internal junction between the section 14 and the section 13 is formed by a convex radius 15 leading to a concave radius 16, whilst at the internal junction between the section 13 and the section 12, there are similarly convex and concave radii 17, 18 respectively, although the radii 17, 18, are significantly smaller than the corresponding radii 15, 16. Since, as will be described, insertion of a pipe to be used with the fitting is into the open end at the section 12, in a direction towards the centre section 11, reference hereinafter to 'downstream' in relation to a position of fittings in the housing will be in relation to this insertion direction.

It will be understood that the housing 10 shown in Figures 1 to 3 is intended for the insertion of respective pipes into its two opposite open ends respectively, and a fitting would normally be of this form. But the housing can also comprise only one half of the housing shown in Figure 1, i.e. as shown in Figures 4 and 5. For example here, the half of the housing shown could be an integral part of some other pipe or tube, or other fitting. However where this form of housing is used, the four internal fitting components shown in Figure 3 would be received in both open ends of the fitting as shown in Figure 4 for the one half of the housing illustrated therein.

Accordingly Figure 3 shows the internal components of the fitting for reception into one of the open ends thereof, these components comprising a grip-ring 19, pipe support means in the form of a spacer 20, sealing means in the form of a rubber O-ring 21 abutting a rear face of the spacer, and a backup washer 22, all of these four components being in the form of circular rings. The washer 22 can be metallic, or of plastics material, such as nylon or acetal. These components 19 to 22 are shown in Figures 4 and 5, fitted in a housing 10a which, as explained above, is shown as half of the housing 10, but with the open end of the housing deformed, to complete the fitting, as will be explained below. The O-ring 21 could be secured, i.e. glued, to the rear face of the spacer.

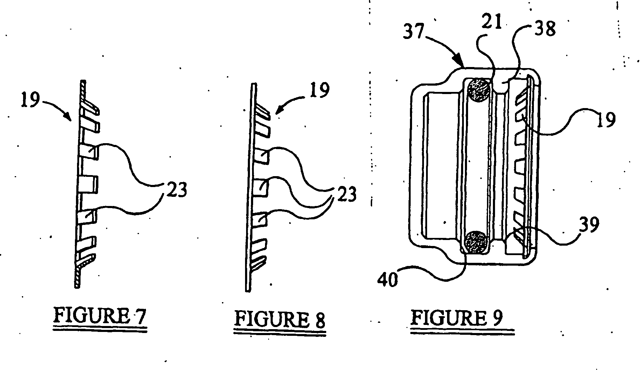

The grip-ring 19, shown in detail in Figures 6 to 8, is of generally conventional form, being of stainless steel, and having a multiplicity of regularly spaced internal teeth 23, the teeth extending outwardly from the main ring-like body of the component as shown in Figures 7 and 8. The angle of inclination of the teeth is, for example, between 45 and 50°. As shown in Figures 4 and 5, the grip-ring 19 is positioned in the housing 10a adjacent to the open end thereof, and positioned downstream of this grip-ring 19 is the spacer 20,the spacer 20 being a brass pressing having a cylindrical body part with an annular face being at one of its open ends.

After the four components have been inserted into an end of the housing 10, or the housing 10a, in the order shown, i.e. with the grip- ring ahead of the spacer, and the spacer ahead of the O-ring, which is itself ahead of the backup washer, which is thus furthest downstream in the housing, the open end of the housing is deformed so as to encapsulate the fitted internal components as shown for the housing 10a in Figures 4 and 5. Conveniently this involves rolling the front edge of the open tube end shown in Figure 1 so that this edge is deformed to lie at substantially 90° to the remainder of the housing, i.e. to be disposed diametrically as opposed to axially of the housing. This roll-over part 35 of the housing not only serves to retain the grip-ring, and the other fitting components within the housing, such components up until then being free in the housing, but also defines an opening 36 of a pre- determined radius at the front of the fitting, the size of this opening being greater than the outer diameter of the pipe 28 with which the fitting is intended to be used. The rolling over effects contact between the grip-ring and the body. Accordingly, as shown in Figure 5, for the inserted pipe, there is clearance around the outside of the pipe at the opening 36. The pipe is unsupported at the entrance to the fitting, and is instead supported downstream of the grip-ring, by the pipe support means in the form of the spacer 20 described.

To produce a joint between the pipe 28 and the fitting shown, for example in Figure 4 and 5, the pipe 28 is aligned with the opening 36 at the mouth of the fitting and pushed-in until the pipe reaches the stepped junction or shoulder formed between the centre section II and the section 14, as shown in Figure 5, the shoulder thus forming a stop to prevent further pipe insertion. The insertion of the pipe causes flexing of the teeth 23, such that when the pipe is fully inserted, the teeth 23, due to their inherent springiness' tightly engage and grip the exterior surface of the pipe, thereby preventing manual 'pulling-out' of the pipe from the fitting. It can be seen from Figure 5 that the grip-ring is retained in place against the rolled-over part 35 of the housing, whilst the open end of the spacer 20 engages the circular main part of the grip-ring at its side from which the teeth project. The O-ring forms a seal with the pipe and the housing, and also engages the projection 26 as shown.

Accordingly in the condition shown in Figure 5, a watertight joint is achieved by means of the O-ring being in a compressed state between the pipe and the housing. To prevent compression of the O-ring during tube insertion, the spacer 20 is at an outer diameter such as to prevent its movement into section of the housing where the sealing takes place. This same feature provides a point of resistance sufficient to allow displacement of the grip-ring teeth upon insertion of the pipe 28. The spacer 20 is made in a form and thickness sufficient to provide a degree of support to the tube 28 to limit the amount of available eccentric movement of the pipe. This is desirable in that excessive eccentric movement of the pipe can degrade the functionality of the O-ring seal. As stated previously, the spacer 20 has a radius 27 to encourage pipe insertion.

In addition to supporting the pipe, the spacer 20 each act to prevent migration of the O-ring from its specified section of the housing 10 into the adjacent spacer and grip-ring diameter section, thus losing compression and acquiring potential for seal failure. ,As shown in Figures 4 and 5, the grip- ring is in contact with the metal housing, so that when the pipe 28, also of metal, is inserted into the fitting, as shown in Figure 5, electrical continuity is ensured between the pipe and the housing. This is important as it is often a requirement with fittings used at present. The electrical continuity is preferably achieved by the deformation, e.g. rolling over, of the front edge of the housing, which brings the grip-ring and housing into contact.

Accordingly whilst one aspect of the fitting is the fact that the diameter of the opening into the fitting is greater than the diameter of the inserted pipe, and thus greater than the diameter defined by the pipe support means, namely the spacer 20, a further, independent aspect of the fitting is that the fitting ensures electrical continuity between an inserted pipe and the housing by virtue of the engagement of at least part of the grip- ring with the housing when the pipe, grip- ring and housing are all of electrically conductive material.

Whilst in the embodiments described above, the pipe support means are separate spacer components, Figure 9 shows an embodiment of the invention having a special form of housing 37, with a closed downstream end, in which the pipe support means is formed as an integral internal annular projection 38 disclosed diametrically in the housing between the O-ring 21 and the grip-ring 19, the projection 38, and indeed the remaining internal structure of the housing, being formed by machining. As can be seen from Figure 9, the annular projection 38 is formed with a pipe lead-in part 39 in the form of an annular chamfer facing the grip-ring teeth. It will also be noted from Figure 9 that no backup washer is provided downstream of the O-ring seal. Instead an annular shoulder 40 is provided at the end of the section of the internal housing part which receives the O-ring seal, this forming a stop for the seal, being disposed radially of the housing and facing axially.

It will be appreciated that with the housing of Figure 9 the downstream end thereof may be open rather than closed.

## Claims

1. A pipe fitting comprising a housing (37) defining at one end an opening for insertion of an end of a predetermined diameter pipe (28), in use, into the fitting with a clearance space at said open end between the pipe (28) and the housing (37), the housing (37) having therein a grip-ring (19), pipe support means downstream of the grip-ring (19) in the direction of pipe insertion, sealing means (21) downstream of the pipe support means, and means (40) limiting movement of the sealing means (21) in said pipe insertion direction, the diameter of said opening being greater than a diameter defined by the pipe support means, the pipe support means being formed by an internal ring (38) integral with the housing (37), said ring (38) being formed by machining the housing (37) internally, and the ring (38) being formed with a lead-in surface (39) for facilitating pipe insertion.

2. A pipe fitting according to claim 1 fitted to one end of a predetermined diameter pipe (28), the pipe (28) passing through an open end of the housing (37) of the fitting with a clearance space between the pipe (28) and the housing (37) and being gripped externally by the grip-ring (19), the pipe (28) passing through pipe support means downstream of the grip-ring (19) in the direction of pipe insertion and through sealing means downstream of the pipe support means.

3. A pipe fitting as claimed in Claim 1 or Claim 2, wherein the pipe fitting housing is of metallic material.

4. A pipe fitting as claimed in Claim 3, wherein the metallic material is copper tube.

5. A pipe fitting as claimed in any one of Claims 1 to 4, wherein the housing is stepped along its length, to form a number of internal sections of successively decreasing diameters respectively.

6. A pipe fitting as claimed in Claim 5, wherein the grip-ring is received in the largest diameter section.

7. A pipe fitting as claimed in Claim 6, wherein the sealing means is received in the next largest diameter section.

8. A pipe fitting as claimed in Claim 7, wherein the pipe support means extend from the largest diameter section into the next largest diameter section.

9. A pipe fitting as claimed in any one of the preceding claims, wherein the sealing means is secured to the pipe support means.

10. A pipe fitting as claimed in any one of Claims 1 to 9, wherein the means (40) limiting movement of the sealing means (21) is a flat axially directed annular shoulder surface.

11. A pipe fitting as claimed in Claim 10, wherein the shoulder surface is formed by an integral machined internal part of the housing (37).

12. A pipe fitting as claimed in any one of the preceding claims, wherein the sealing means (21) is an O-ring of resilient material.

## Patentansprüche

1. Rohrverbindung, umfassend ein Gehäuse (37), welches an einem Ende durch eine Öffnung begrenzt wird, um ein Ende eines Rohrs (28) mit vorgegebenem Durchmesser bei Verwendung in die Verbindung einzuführen, die einen Zwischenraum an dem offenen Ende zwischen dem Rohr (28) und dem Gehäuse (37) aufweist, wobei das Gehäuse (37) in demselben einen Klemmring (19), eine dem Klemmring (19) in Einführungsrichtung des Rohrs nachgelagerte Rohrauflagevorrichtung, eine der Rohrauflagevorrichtung nachgelagerte Dichtungseinrichtung (21) und eine Einrichtung (40) zur Einschränkung der Bewegung der Dichtungseinrichtung (21) in Einführungsrichtung des Rohrs hat, wobei der Durchmesser der Öffnung größer ist als ein Durchmesser, der durch die Rohrauflagevorrichtung begrenzt wird, während die Rohrauflagevorrichtung durch einen Innenring (38) ausgebildet wird, der mit dem Gehäuse (37) fest verbunden ist, wobei der Ring (38) durch die maschinelle Bearbeitung des Gehäuses (37) im Inneren ausgebildet wird, und der Ring (38) mit einer Einführungsoberfläche (39) für das erleichterte Einführen des Rohrs ausgebildet ist.

2. Rohrverbindung nach Anspruch 1, angebracht an einem Ende eines Rohrs (28) mit vorgegebenem Durchmesser, wobei das Rohr (28) durch ein offenes Ende des Gehäuses (37) der Verbindung, die einen Zwischenraum zwischen dem Rohr (28) und dem Gehäuse (37) hat, verläuft und außen durch den Klemmring (19) ergriffen wird, wobei das Rohr (28) durch die dem Klemmring (19) nachgelagerte Rohrauflagevorrichtung in Einführungsrichtung des Rohrs und durch die der Rohrauflagevorrichtung nachgelagerte Dichtungseinrichtung verläuft.

3. Rohrverbindung, wie in Anspruch 1 oder Anspruch 2 beansprucht, **dadurch gekennzeichnet, dass** das Rohrverbindungsgehäuse aus metallischem Material ist.

4. Rohrverbindung, wie in Anspruch 3 beansprucht, **dadurch gekennzeichnet, dass** das metallische Material Kupferrohr ist.

5. Rohrverbindung, wie in einem der Ansprüche 1 bis 4 beansprucht, **dadurch gekennzeichnet, dass** das Gehäuse entlang seiner Länge abgestuft ist, um eine Anzahl von Innenabschnitten mit jeweils sukzessive abnehmenden Durchmessern auszubilden.

6. Rohrverbindung, wie in Anspruch 5 beansprucht, **dadurch gekennzeichnet, dass** der Klemmring im Abschnitt mit dem größten Durchmesser aufgenommen wird.

7. Rohrverbindung, wie in Anspruch 6 beansprucht, **dadurch gekennzeichnet, dass** die Dichtungseinrichtung im Abschnitt mit dem nächst größten Durchmesser aufgenommen wird.

8. Rohrverbindung, wie in Anspruch 7 beansprucht, **dadurch gekennzeichnet, dass** sich die Rohrauflagevorrichtung vom Abschnitt mit dem größten Durchmesser in den Abschnitt mit dem nächst größten Durchmesser hinein erstreckt.

9. Rohrverbindung, wie in einem der vorangehenden Ansprüche beansprucht, **dadurch gekennzeichnet, dass** die Dichtungseinrichtung an der Rohrauflagevorrichtung befestigt ist.

10. Rohrverbindung, wie in einem der Ansprüche 1 bis 9 beansprucht, **dadurch gekennzeichnet, dass** die Einrichtung (40) für die Beschränkung der Bewegung der Dichtungseinrichtung (21) eine flache axial gerichtete ringförmige Schulterfläche ist.

11. Rohrverbindung, wie in Anspruch 10 beansprucht, **dadurch gekennzeichnet, dass** die Schulterfläche durch einen integralen maschinell bearbeiteten Innenteil des Gehäuses (37) ausgebildet wird.

12. Rohrverbindung, wie in einem der vorangehenden Ansprüche beansprucht, **dadurch gekennzeichnet, dass** die Dichtungseinrichtung (21) ein O-Ring aus elastischem Material ist.

## Revendications

1. Raccord de canalisation comprenant un boîtier (37) définissant, à une première extrémité, une ouverture destinée à l'insertion d'une extrémité d'un tuyau de diamètre prédéterminé (28), en utilisation, dans le raccord, avec un espace de jeu au niveau de ladite extrémité ouverte entre le tuyau (28) et le boîtier (37), le boîtier (37) ayant dans celui-ci un collier de serrage (19), des moyens de support de tuyau en aval du collier de serrage (19) dans la direction d'insertion du tuyau, des moyens d'étanchéité (21) en aval des moyens de support de tuyau, et des moyens (40) limitant un déplacement des moyens d'étanchéité (21) dans ladite direction d'insertion de tuyau, le diamètre de ladite ouverture étant supérieur à un diamètre défini par les moyens de support de tuyau, les moyens de support de tuyau étant formés par un anneau interne (38) en un seul bloc avec le boîtier (37), ledit anneau (38) étant formé en usinant le boîtier (37) intérieurement, et l'anneau (38) étant formé avec une surface d'introduction (39) pour faciliter une insertion du tuyau.

2. Raccord de canalisation selon la revendication 1, agencé sur une première extrémité d'un tuyau de diamètre prédéterminé (28), le tuyau (28) passant à travers une extrémité ouverte du boîtier (37) du raccord avec un espace de jeu entre le tuyau (28) et le boîtier (37), et étant serré extérieurement par le collier de serrage (19), le tuyau (28) passant à travers des moyens de support de tuyau en aval du collier de serrage (19) dans la direction d'insertion de tuyau, et à travers des moyens d'étanchéité en aval de moyens de support de tuyau.

3. Raccord de canalisation selon la revendication 1 ou 2, dans lequel le boîtier de raccord de canalisation est en un matériau métallique.

4. Raccord de canalisation selon la revendication 3, dans lequel le matériau métallique est un tube de cuivre.

5. Raccord de canalisation selon l'une quelconque des revendications 1 à 4, dans lequel le boîtier est étagé le long de sa longueur, pour former plusieurs tronçons internes ayant des diamètres successivement décroissants, respectivement.

6. Raccord de canalisation selon la revendication 5, dans lequel le collier de serrage est reçu dans le tronçon de plus grand diamètre.

7. Raccord de canalisation selon la revendication 6, dans lequel les moyens d'étanchéité sont reçus dans le tronçon de plus grand diamètre suivant.

8. Raccord de canalisation selon la revendication 7, dans lequel les moyens de support de tuyau s'étendent à partir du tronçon de plus grand diamètre jusque dans le tronçon de plus grand diamètre suivant.

9. Raccord de canalisation selon l'une quelconque des revendications précédentes, dans lequel les moyens d'étanchéité sont fixés sur les moyens de support de tuyau.

10. Raccord de canalisation selon l'une quelconque des revendications 1 à 9, dans lequel les moyens (40) limitant un déplacement des moyens d'étanchéité (21) sont constitués d'une surface d'épaulement annulaire plate dirigée axialement.

11. Raccord de canalisation selon la revendication 10, dans lequel la surface d'épaulement est formée par une partie interne usinée en un seul bloc du boîtier (37).

12. Raccord de canalisation selon l'une quelconque des revendications précédentes, dans lequel les moyens d'étanchéité (21) sont constitués d'un joint torique en matériau élastique.
